# EUROPEAN PATENT SPECIFICATION

(11) **EP 2 072 351 B1**
(45) Date of publication and mention of the grant of the patent: **26.03.2014**
(21) Application number: 08021388.7
(22) Date of filing: 09.12.2008
(51) Int. Cl.: B60R 25/00, B60K 37/00, B62D 65/02, B62D 25/14

(54) **Antitheft device for vehicle**
Diebstahlschutzvorrichtung für ein Fahrzeug
Dispositif antivol pour véhicule

(30) Priority: 21.12.2007 JP 2007330504
(43) Date of publication of application: 24.06.2009
(73) Proprietor: Nissan Motor Co., Ltd., Kanagawa 221-0023 (JP)
(72) Inventor: Monzen, Akihide, Atsugi-shi Kanagawa 243-0123 (JP)
(74) Representative: Grünecker, Kinkeldey, Stockmair & Schwanhäusser

(56) References cited:
- JP-A- 2004 132 273
- JP-A- 2004 155 317
- US-A1- 2006 197 381

## Description

The present invention relates to an antitheft device of a vehicle according to the preamble part of claim 1.

In particular, the present invention relates to an antitheft device having such a structure that an electronic unit is disposed inside an instrument panel of a vehicle.

Japanese Patent Application Laid-Open No. JP2004-155317 (=JP2004155317) discloses a known arrangement structure of electronic unit where an electronic unit is disposed on a backface of a meter unit provided for an instrument panel of a vehicle. The electronic unit is exposed by dismounting the meter unit, so that maintenance or inspection work such as replacement of an electronic unit board can be implemented.

The above known arrangement structure of electronic unit, however, easily exposes the electronic unit by dismounting the meter unit, thus allowing an unjust access to the electronic unit.

US 2006/0197381 A1 discloses an antitheft device which is readable on the preamble part of claim 1.

JP 2004-132273 discloses an immobilizer unit which is electrically connected to a remote control engine start unit and an engine electronic control unit. The remote control engine start unit is arranged in vehicle width direction beside the immobilizer unit, while the engine electronic control unit is arranged in vehicle length direction in front of the immobilizer unit. The immobilizer unit and the remote control engine start unit are either arranged in the instrument panel or in the engine room. The engine electronic control unit is arranged in the engine room.

It is an objective of the present invention to provide an antitheft device capable of preventing an unjust access to an electronic unit.

According to the present invention, said objective is solved by an antitheft device having the combination of features of independent claim 1.

Preferred embodiments of the present invention are laid down in the subclaims.

In the following, the present invention is explained in greater detail by means of embodiments thereof in conjunction with the accompanying drawingswherein:
Fig. 1 is a side cross sectional view of an antitheft device, according to an embodiment.
Fig. 2 is a perspective view of a periphery of an instrument panel on the driver's seat side.
Fig. 3 is a perspective view showing a state that first and second electronic units are mounted to a steering member, where the instrument panel and the like in Fig. 2 are omitted.
Fig. 4 is an exploded perspective view showing a state that the first and second electronic units are in the process of being mounted to the steering member.
Fig. 5 is a perspective view showing a state that a wire harness and an air conditioner duct are disposed, in addition to the state in Fig. 3.

In the following, an embodiment will be described in detail with reference to the accompanying drawings.

For ease of understanding, the following description will contain various directional terms, such as right, left, upper, lower, forward, rearward and the like.

However, such terms are to be understood with respect to only a drawing or drawings on which the corresponding part of element is illustrated.

In addition, it is noted that the drawings referred to hereinafter as illustrating the preferred embodiment are not to scale and are schematic in nature and, therefore, should not be taken too literally. Nevertheless, the drawings illustrate the technical teaching sufficiently to enable one skilled in the art to practice the technical teaching.

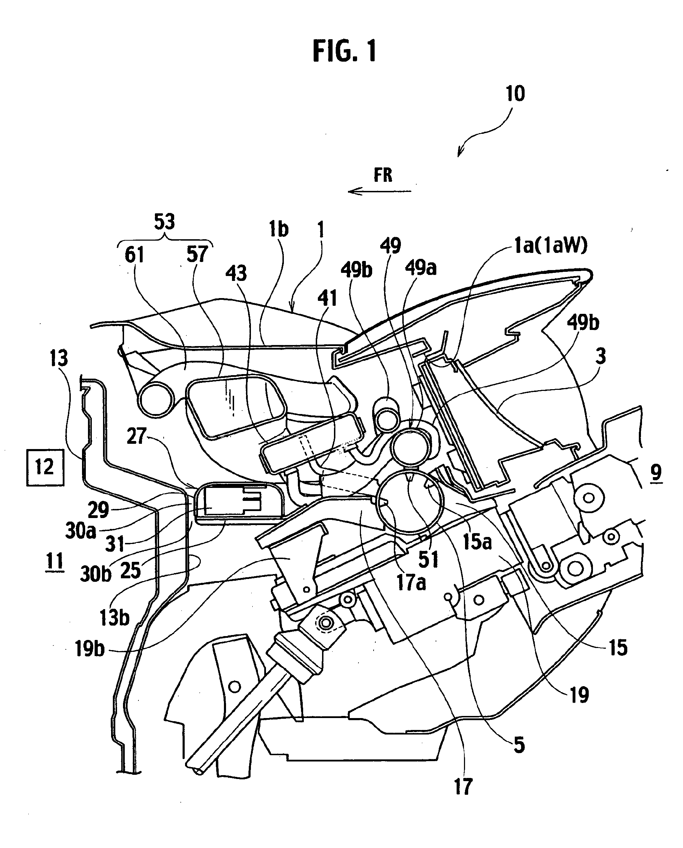

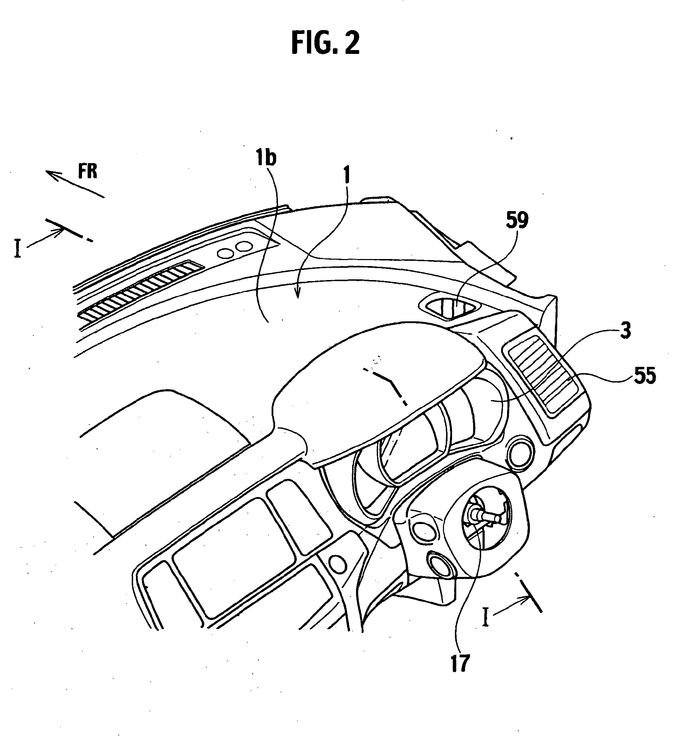

Fig. 1 is a side cross sectional view of an antitheft device 10 of a vehicle, according to the embodiment Fig. 1 is taken along the line I-I in Fig. 2 showing a perspective view of a periphery of an instrument panel 1 on the driver's seat side. In Fig. 1 and Fig. 2, an arrow FR directs the forward direction of the vehicle body

An opening part 1 a is defined on the vehicular rear side of the instrument panel 1 disposed in a vehicle compartment 9. A meter unit 3 as a mounting member is dismountably mounted to a wall 1aW of the opening part 1a. Being fit into the opening part 1 a, the meter unit 3 is fixed to the instrument panel 1 by means of a plurality of clips (not shown in Fig. 1).

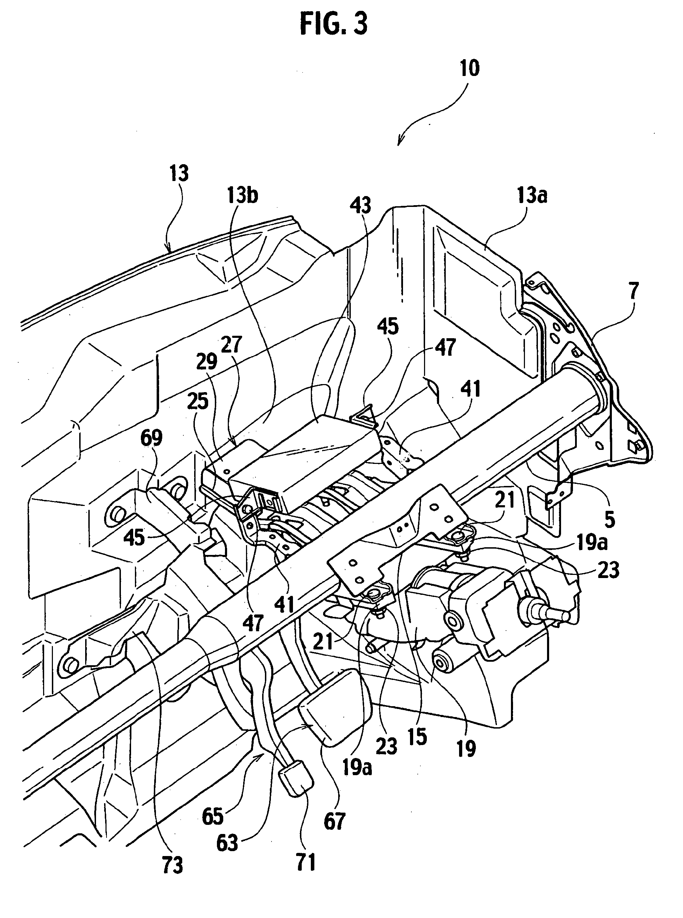

A steering member 5 extending in the vehicular widthwise direction is disposed slightly below a position which is on the vehicular forward side of the meter unit 3. As shown in Fig. 3 which is a perspective view of the antitheft device 10 omitting the instrument panel 1 and the like, the steering member 5 is fitted with mounting brackets 7 on right and left sides in the vehicular widthwise direction (Fig. 3 shows the right side only).

Meanwhile, from an engine room 11 in the forward position relative to the vehicle compartment 9, a dash panel 13 separates the vehicle compartment 9 having the instrument panel 1. The dash panel 13 has sideface parts 13a (see Fig. 3) bent in the vehicular rearward direction from the respective right and left sides in the vehicular widthwise direction. Fixing the mounting bracket 7 to the sideface parts 13a can mount the steering member 5 to the vehicle body.

A rearward column unit-mounting bracket 15 and a forward column unit-mounting bracket 17 are mounted respectively to the vehicular rearward and forward parts of the steering member 5's position corresponding to the driver's seat. A column unit 19 to be fitted with a steering (not shown) is mounted to the lower part of each of the rearward and forward column unit-mounting brackets 15, 17. More specifically described as follows. Bolts 21 protrude downward on the right and left sides of the rearward column unit-mounting bracket 15 in the vehicular widthwise direction. The bolts 21 and mating nuts 23 (see Fig. 3) work for tightly fixing rearward mounting parts 19a of the column unit 19. Moreover, as shown in Fig. 1, the column unit 19 has a forward mounting part 19b protruding upward and fixed to the lower face of the forward column unit-mounting bracket 17.

Herein, the rearward and forward column unit-mounting brackets 15, 17 are fixed in such a configuration that fitting pawls 15a, 17a are respectively fit with walls of fitting holes (not shown) of the steering member 5, as shown in Fig. 1.

In addition, a plate-like first electronic unit-mounting bracket 25 is integrated with an upper face of the forward column unit-mounting bracket 17. A first electronic unit 27 as another electronic unit is mounted to an upper face of the first electronic unit-mounting bracket 25.

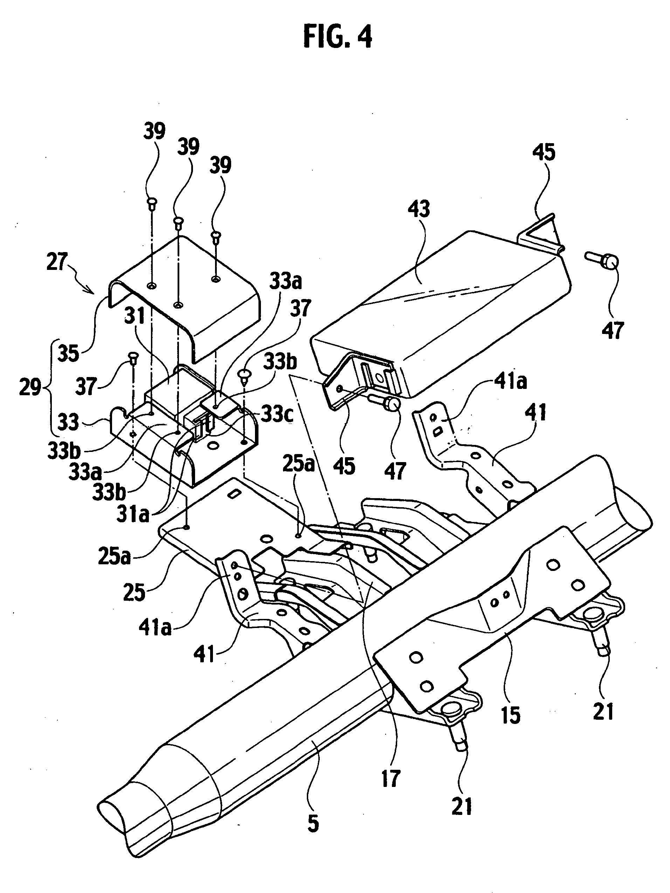

A unit body 31 is fixedly received in a case 29 of the first electronic unit 27. As shown in the exploded perspective view in Fig. 4, the case 29 includes a lower case 33 and an upper case 35, where the lower case 33 is tightly fixed to the first electronic unit-mounting bracket 25 by inserting two screws 37 into respective two screw holes 25a. Flanges 33a each bent inward are provided at the upper part of the lower case 33. From the upper part of the upper case 35 for covering the lower case 33, three screws 39 are tightly inserted into three respective screw holes 33b of the flanges 33a, to thereby fix the upper case 35 to the lower case 33.

As shown in Fig. 4, the unit body 31 includes a pair of right and left engaging pawls 31a on a sideface on the vehicle body direction side. An engaging tongue piece 33c (plate-like) extending upward from the lower case 33 is inserted inside the engaging pawls 31a. With the thus inserted state of the engaging tongue piece 33c, the lower case 33 and upper case 35 respectively press the upper part and lower part of the unit body 31, thus fixing the unit body 31 in the case 29.

In addition, a pair of second electronic unit-mounting brackets 41 extending toward the vehicular forward part are fixed to the steering member 5's parts on the forward column unit-mounting bracket 17's right and left sides in the vehicular widthwise direction. Hereinabove, like the fixing of the rearward and forward column unit-mounting brackets 15, 17, fixing of the second electronic unit-mounting brackets 41 is done by fitting fitting pawls (not shown in Fig. 4) with respective fitting holes (not shown in Fig. 4) of the steering member 5.

Then, a second electronic unit 43 is mounted to head end mounting parts 41 a of the respective second electronic unit-mounting brackets 41 via unit-side mounting parts 45 by means of bolts 47, where the head end mounting parts 41a are bent upward and forward and the unit-side mounting parts 45 are respectively disposed on the right and left sides. The second electronic unit 43 is disposed close to the backface (a face on forward side of the vehicle) of the meter unit 3 in Fig. 1. With such a structure, dismounting the meter unit 3 from the instrument panel 1 exposes the second electronic unit 43 through the opening part 1a, bringing about an easy access to the second electronic unit 43 and facilitating maintenance or inspection work such as replacement of the second electronic unit 43. In other words, the second electronic unit 43 serves as one of at least two electronic units.

The second electronic unit 43 is a body control module (BCM) for controlling operation of various parts of the vehicle such as power window, reclining mechanism and the like. A key ID information which is common to that set for the first electronic unit 27 is set for the second electronic unit 43.

Moreover, an engine control module (ECM) 12 as an electronic unit for controlling the engine is set in the engine room 11, as shown in Fig. 1. Another key ID information which is common to those for the first electronic unit 27 and second electronic unit 43 is also set for the engine control module (ECM).

The first electronic unit 27 is not present for controlling operation of each of the various parts of the vehicle. Instead, the first electronic unit 27 merely sets the key ID information associated with the other electronic units 12, 43. For example, when the vehicle occupant enters the vehicle and tries to start the engine as a driving source of the vehicle, the engine can be started in the following condition: The key ID information memorized by the key of the vehicle occupant, the ID information of the first electronic unit 27 and the ID information of the two electronic units (BCM 43 and ECM 12) match with each other. As such, the antitheft device 10 is accomplished.

On the vehicular forward side of the meter unit 3, the second electronic unit 43 is disposed between the meter unit 3 and the first electronic unit 27, as shown in Fig. 1. With the meter unit 3 dismounted from the instrument panel 1, the second electronic unit 43 is disposed in a position where the second electronic unit 43 can be subjected to the maintenance or inspection such as replacement through the opening part 1 a. With the second electronic unit 43 disposed between the opening part 1a and the first electronic unit 27, access to the first electronic unit 27 through the opening part 1a is of difficulty due to hindrance by the second electronic unit 43.

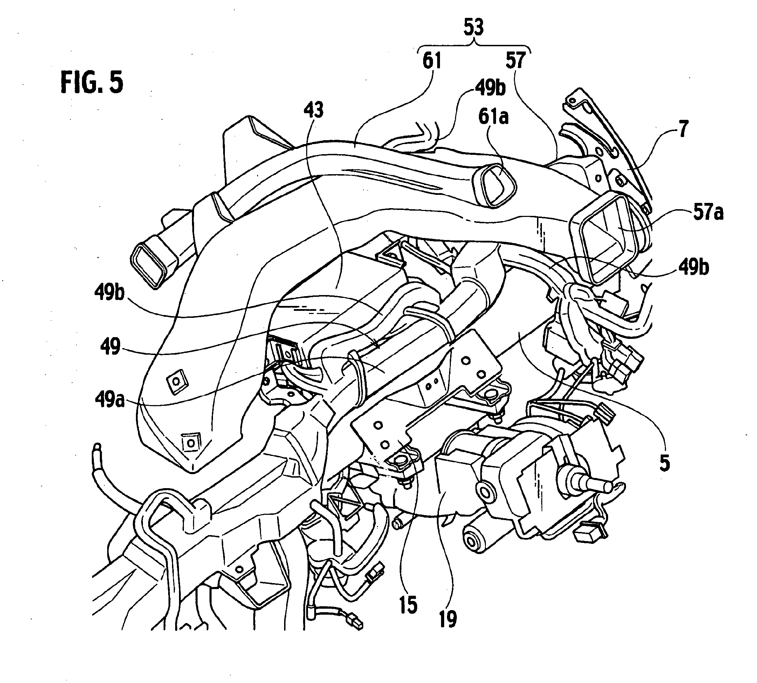

Moreover, above the steering member 5, a main harness 49a of a wire harness 49 is disposed along the longitudinal direction (vehicular widthwise direction) of the steering member 5, as shown in Fig. 5. A plurality of fitting pawls 51 (see Fig. 1) provided for the main harness 49a are fit in fitting holes (not shown in Fig. 1) formed in the steering member 5, thus fixing the fitting pawls 51. A sub-harness 49b properly divided from the main harness 49a is connected to the first electronic unit 27, second electronic unit 43, electronic parts (not shown) and the like. In other words, the wire harness 49 extending in the longitudinal direction of the steering member 5 fits with the steering member 5, with the divided sub-harness 49b entangled with various parts and thereby coupled with various parts, thus making it difficult to move the wire harness 49 from the position where the wire harness 49 is disposed.

Herein, not only the instrument panel 1, Fig. 3 also omits the wire harness 49 and an after-described air conditioner duct 53 which is shown in Fig. 5.

As shown in Fig. 1, the wire harness 49's member, especially the main harness 49a on the meter unit 3's vehicular forward side is disposed between the meter unit 3 and the first electronic unit 27, moreover between the second electronic unit 43 and the meter unit 3

Moreover, the air conditioner duct 53 is disposed between the first electronic unit 27 and an upper face 1b of the instrument panel 1 above the first electronic unit 27. The air conditioner duct 53 includes: a side vent duct 57 having an opening part 57a (see Fig. 5) which is connected to and communicating with a side vent 55 shown in Fig. 2, and a side defroster duct 61 divided from the side vent duct 57 and having an opening part 61a (see Fig. 5) which is connected to and communicating with a side defroster 59 shown in Fig. 2.

As shown in Fig. 1, a part of the side vent duct 57 is disposed right above the first electronic unit 27 and is connected to an air conditioning unit (not shown in Fig. 1). The second electronic unit 43's part on the vehicular forward side is positioned on the vehicular rearward side between the side vent duct 57 and the first electronic unit 27. A part of the side defroster duct 61 is disposed between the dash panel 13 and the side vent duct 57, where the dash panel 13 is disposed on the vehicular forward side of the side vent duct 57.

The dash panel 13 in Fig. 1 has a bulged part 13b which is bulged in the vehicular rearward direction in such a configuration as to come closer to the first electronic unit 27. Defined thereby between the bulged part 13b and the first electronic unit 27 is only a first gap 30a which is sufficiently slight.

In addition, a brake unit 63 and a parking brake unit 65 are disposed below the first electronic unit 27, as shown in Fig. 3. A brake pedal 67 of the brake unit 63 is mounted to the dash panel 13 via a pedal mounting bracket 69, while a parking brake pedal 71 of the parking brake unit 65 is mounted to the dash panel 13 via a pedal mounting bracket 73.

The above brake unit 63 is disposed substantially right below the first electronic unit 27, while the above parking brake unit 65 is disposed in a position slightly deviated leftward in the vehicular widthwise direction relative to a position substantially right below the first electronic unit 27.

As set forth above, the first electronic unit 27 is disposed in a position which is surrounded by the steering member 5, the column unit 19, the wire harness 49, the air conditioner duct 53, the bulged part 13b of the dash panel 13, the brake unit 63 and the parking brake unit 65, each of which is a member close to the instrument panel 1.

With the above antitheft device 10 of the vehicle, dismounting the meter unit 3 from the instrument panel 1 allows the maintenance or inspection work such as replacement of the second electronic unit 43 through the opening part 1a.

Meanwhile, even in such a case that an unjust person tries to make an unjust access to the first electronic unit 27 by dismounting the meter unit 3, the second electronic unit 43 as hindrance works for preventing the above access.

Moreover, even if the unjust person can dismount the hindering second electronic unit 43 and then tries to make an access to the first electronic unit 27, the access to the first electronic unit 27 is of difficulty due to the following structure of the antitheft device 10:
The steering member 5 is disposed between the opening part 1a and the first electronic unit 27 and the main harness 49a is disposed above the steering member 5, thus narrowing down an accessible area to the first electronic unit 27 through the opening part 1a.

Moreover, when the unjust person tries to make an access to the first electronic unit 27 by breaking the upper face 1b of the instrument panel 1, the air conditioner duct 53 above the first electronic unit 27 works for hindering the unjust person, thus making it difficult for the unjust person to make an access to the first electronic unit 27.

Moreover, when the unjust person tries to make an access to the first electronic unit 27 from below the instrument panel 1, the column unit 19, the brake unit 63, and the parking brake unit 65 which are disposed below the first electronic unit 27 work for hindering the unjust person, thus making it difficult for the unjust person to make an access to the first electronic unit 27.

Moreover, the first gap 30a which is sufficiently slight and formed between the bulged part 13b (of the dash panel 13) and the first electronic unit 27 while a second gap 30b between the bulged part 13b and the first electronic unit-mounting bracket 25 is also sufficiently slight, thus making it difficult for the unjust person to make an access to the first electronic unit 27.

As set forth above, even if the unjust person can change the ID information by making an unjust access to the second electronic unit 43 after dismounting the meter unit 3, the antitheft device 10 can effectively work due to the following structure and operation:

The first electronic unit 27 is surrounded by various members below the instrument panel 1, making it extremely difficult for the unjust person to make an access to the first electronic unit 27, thus preventing change of the ID information of the first electronic unit 27.

In addition, mounting the first electronic unit 27 and the second electronic unit 43 via respectively the first electronic unit-mounting bracket 25 and the second electronic unit-mounting bracket 41 which are provided for the steering member 5 easily accomplishes the following operations with a simple structure:
A user (just or righteous person) can make an easy access to the second electronic unit 43 through the opening part 1a, while an unjust person cannot make an easy access to the first electronic unit 27.

## Claims

1. An antitheft device (10) of a vehicle where a driving source is started when ID information memorized in a key of the vehicle matches with ID information memorized in at least two electronic units (12, 27, 43), the antitheft device (10) comprising:
an instrument panel (1) having an opening part (1a) and members (5, 13b, 19, 49, 53, 63, 65);
the at least two electronic units (12, 27, 43) disposed in the instrument panel (1) and communicating with each other; and
a mounting member (3) adapted to be dismountably mounted to a wall (1aW) of the opening part (1a) of the instrument panel (1), wherein
one (43) of the at least two electronic units (12, 27, 43) is disposed in a position where the one (43) of the at least two electronic units (12,27,43) is accessible through the opening part (1a) with the mounting member (3) dismounted from the instrument panel (1), and **characterized in that**
another (27) of the at least two electronic units (12,27,43) which sets the ID information is disposed in a position where it is surrounded by the members (5,13b,19,49,53,63,65) of the instrument panel (1) and covered by the one electronic unit (43) and the members (5, 13b, 19, 49, 53, 63, 65) with regard to the opening part (1a), so that the accessible area through the opening part (1a) to said another electronic unit (27) is narrowed down.

2. The antitheft device (10) of the vehicle according to claim 1, **characterized in that** the mounting member (3) is a meter unit (3).

3. The antitheft device (10) of the vehicle according to any one of claims 1 and 2, **characterized in that** the members (5,13b, 19, 49, 53, 63, 65) of the instrument panel (1) include a steering member (5) disposed between the other electronic unit (27) and the opening part (1a).

4. The antitheft device (10) of the vehicle according to any one of claims 1 to 3, **characterized in that** the members (5, 13b, 19, 49, 53, 63, 65) of the instrument panel (1) include a wire harness (49) disposed between the other electronic unit (27) and the opening part (1a).

5. The antitheft device (10) of the vehicle according to any one of claims 1 to 4, **characterized in that** the members (5, 13b, 19, 49, 53, 63, 65) of the instrument panel (1) include an air conditioner duct (53) disposed between the other electronic unit (27) and an upper face (1b) of the instrument panel (1).

6. The antitheft device (10) of the vehicle according to any one of claims 1 to 5, **characterized in that** the members (5, 13b, 19, 49, 53, 63, 65) of the instrument panel (1) include a column unit (19) disposed below the other electronic unit (27).

7. The antitheft device (10) of the vehicle according to any one of claims 1 to 6, **characterized in that** the members (5, 13b, 19, 49, 53, 63, 65) of the instrument panel (1) include a brake unit (63) and a parking brake unit (65) which are disposed below the other electronic unit (27).

8. The antitheft device (10) of the vehicle according to any one of claims 1 to 7, **characterized in that** the instrument panel (1) is included in a vehicle compartment (9) and an engine room (11) is disposed in a forward position relative to the vehicle compartment (9), a dash panel (13) configured to separate the vehicle compartment (9) from the engine room (11) has a bulged part (13b) which is bulged toward the vehicle compartment (9) side such that the bulged part (13b) comes closer to the other electronic unit (27), and the members (5, 13b, 19, 49, 53, 63, 65) of the instrument panel (1) include the bulged part (13b).

9. The antitheft device (10) of the vehicle according to any one of claims 3 to 8, **characterized in that** the at least two electronic units are mounted to the steering member (5) via respective electronic-unit mounting brackets (25,41).

10. The antitheft device (10) of the vehicle according to any one of claims 1 to 9, **characterized in that** the one (43) of the at least two electronic units (12,27,43) is configured to control an operation of various parts of the vehicle, and when the ID information of the key is owned in common between the one (43) of the at least two electronic units (12,27,43) and the other electronic unit (27), the operation of the various parts of the vehicle is controllable by the one (43) of the at least two electronic units (12,27,43).

11. The antitheft device (10) of the vehicle according to claim 10, **characterized in that** the at least two electronic units (12,27,43) include an engine control module (12) set in an engine room (11), and the engine control module (12) has another ID information of the key, the other ID information being common to those for the one (43) of the at least two electronic units (12,27,43) and the other electronic unit (27).

12. The antitheft device (10) of the vehicle according to claim 7, **characterized in that** the brake unit (63) is disposed substantially right below the other electronic unit (27), and the parking brake unit (65) is disposed in a position slightly deviated leftward in a vehicular widthwise direction relative to a position substantially right below the other electronic unit (27).

## Patentansprüche

1. Diebstahlschutzvorrichtung (10) für ein Fahrzeug, bei der eine Antriebsquelle gestartet wird, wenn in einem Schlüssel des Fahrzeugs gespeicherte ID-Informationen mit in wenigstens zwei elektronischen Einheiten (12, 27, 43) gespeicherten ID-Informationen übereinstimmen, wobei die Diebstahlschutzvorrichtung (10) umfasst:
ein Armaturenbrett (1) mit einem Öffnungsteil (1a) und Gliedern (5, 13b, 19, 49, 53, 63, 65),
wobei die wenigstens zwei elektronischen Einheiten (12, 27, 43) in dem Armaturenbrett (1) angeordnet sind und miteinander kommunizieren, und
ein Montageglied (3), das ausgebildet ist, um demontierbar an einer Wand (1 aW) des Offnungsteils (1a) des Armaturenbretts (1) montiert zu werden, wobei
eine (43) der wenigstens zwei elektronischen Einheiten (12, 27, 43) an einer Position angeordnet ist, wo auf die eine (43) der wenigstens zwei elektronischen Einheiten (12, 27, 43) durch den Öffnungsteil (1a) hindurch zugegriffen werden kann, wenn das Montageglied (3) von dem Armaturenbrett (1) demontiert ist, und
**dadurch gekennzeichnet, dass**
eine andere (27) der wenigstens zwei elektronischen Einheiten (12, 27, 43), die die ID-INformationen setzt, an einer Position angeordnet ist, wo sie durch die Glieder (5, 13b, 19, 49, 53, 63, 65) des Armaturenbretts (1) umgeben wird und durch die eine elektronische Einheit (43) und die Glieder (5, 13b, 19, 49, 53, 63, 65) in Bezug auf den Öffnungsteil (1a) bedeckt wird, sodass der zugreifbare Bereich durch den Öffnungsteil (1a) hindurch auf die andere elektronische Einheit (27) verschmälert ist.

2. Diebstahlschutzvorrichtung (10) für ein Fahrzeug nach Anspruch 1, **dadurch gekennzeichnet, dass** das Montageglied (3) eine Messeinheit (3) ist.

3. Diebstahlschutzvorrichtung (10) für ein Fahrzeug nach einem der Ansprüche 1 und 2, **dadurch gekennzeichnet, dass** die Glieder (5, 13b, 19, 49, 53, 63, 65) des Armaturenbretts (1) ein Lenkglied (5) umfassen, das zwischen der anderen elektronischen Einheit (27) und dem Öffnungsteil (1a) angeordnet ist.

4. Diebstahlschutzvorrichtung (10) für ein Fahrzeug nach einem der Ansprüche 1 bis 3, **dadurch gekennzeichnet, dass** die Glieder (5, 13b, 19, 49, 53, 63, 65) des Armaturenbretts (1) einen Kabelbaum (49) umfassen, der zwischen der anderen elektronischen Einheit (27) und dem Öffnungsteil (1a) angeordnet ist.

5. Diebstahlschutzvorrichtung (10) für ein Fahrzeug nach einem der Ansprüche 1 bis 4, **dadurch gekennzeichnet, dass** die Glieder (5, 13b, 19, 49, 53, 63, 65) des Armaturenbretts (1) einen Klimaanlagenkanal (53) umfassen, der zwischen der anderen elektronischen Einheit (27) und einer oberen Fläche (1 b) des Armaturenbretts (1) angeordnet ist.

6. Diebstahlschutzvorrichtung (10) für ein Fahrzeug nach einem der Ansprüche 1 bis 5, **dadurch gekennzeichnet, dass** die Glieder (5, 13b, 19, 49, 53, 63, 65) des Armaturenbretts (1) eine Säuleneinheit (19) umfassen, die unter der anderen elektronischen Einheit (27) angeordnet ist.

7. Diebstahlschutzvorrichtung (10) für ein Fahrzeug nach einem der Ansprüche 1 bis 6, **dadurch gekennzeichnet, dass** die Glieder (5, 13b, 19, 49, 53, 63, 65) des Armaturenbretts (1) eine Bremseinheit (63) und eine Parkbremseinheit (65) umfassen, die unter der anderen elektronischen Einheit (27) angeordnet sind.

8. Diebstahlschutzvorrichtung (10) für ein Fahrzeug nach einem der Ansprüche 1 bis 7, **dadurch gekennzeichnet, dass** das Armaturenbrett (1) in einem Fahrzeugraum (9) enthalten ist und ein Motorraum (11) an einer vorderen Position relativ zu dem Fahrzeugraum (9) angeordnet ist, wobei eine Trennwand (13), die konfiguriert ist, um den Fahrzeugraum (9) von dem Motorraum (11) zu trennen, einen gewölbten Teil (13b) aufweist, der sich zu der Seite des Fahrzeugraums (9) wölbt, sodass der gewölbte Teil (13b) der anderen elektronischen Einheit (27) näher kommt, und dass die Glieder (5, 13b, 19, 49, 53, 63, 65) des Armaturenbretts (1) den gewölbten Teil (13b) umfassen.

9. Diebstahlschutzvorrichtung (10) für ein Fahrzeug nach einem der Ansprüche 3 bis 8, **dadurch gekennzeichnet, dass** die wenigstens zwei elektronischen Einheiten an dem Lenkglied (5) unter Verwendung von entsprechenden Elektronikeinheit-Montageklammern (25, 41) montiert sind.

10. Diebstahlschutzvorrichtung (10) für ein Fahrzeug nach einem der Ansprüche 1 bis 9, **dadurch gekennzeichnet, dass** die eine (43) der wenigstens zwei elektronischen Einheiten (12, 27, 43) konfiguriert ist, um einen Betrieb der verschiedenen Teile des Fahrzeugs zu steuern, wobei, wenn die ID-Informationen des Schlüssels sowohl in der einen (43) der wenigstens zwei elektronischen Einheiten (12, 27, 43) als auch in der anderen elektronischen Einheit (27) vorhanden sind, der Betrieb der verschiedenen Teile des Fahrzeugs durch die eine (43) der wenigstens zwei elektronischen Einheiten (12, 27, 43) gesteuert werden kann.

11. Diebstahlschutzvorrichtung (10) für ein Fahrzeug nach Anspruch 10, **dadurch gekennzeichnet, dass** die wenigstens zwei elektronischen Einheiten (12, 27, 43) ein Motorsteuermodul (12) umfassen, das in einem Motorraum (11) angeordnet ist, wobei das Motorsteuermodul (12) andere ID-Informationen des Schlüssels aufweist, wobei die anderen ID-Informationen der einen (43) der wenigstens zwei elektronischen Einheiten (12, 27, 43) und der anderen elektronischen Einheit (27) gemein sind.

12. Diebstahlschutzvorrichtung (10) für ein Fahrzeug nach Anspruch 7, **dadurch gekennzeichnet, dass** die Bremseinheit (63) im Wesentlichen direkt unter der anderen elektronischen Einheit (27) angeordnet ist und die Parkbremseinheit (65) an einer Position angeordnet ist, die etwas nach links in einer Fahrzeugbreitenrichtung relativ zu einer Position direkt unter der anderen elektronischen Einheit (27) abweicht.

## Revendications

1. Dispositif antivol (10) de véhicule dans lequel on démarre une source de commande lorsque des informations d'identifiant mémorisées dans la clé du véhicule correspondent à des informations d'identifiant mémorisées dans au moins deux unités électroniques (12, 27, 43), le dispositif antivol (10) comprenant :
un tableau de bord (1) comportant une partie d'ouverture (1a) et des éléments (5, 13b, 19, 49, 53, 63, 65) ;
les au moins deux unités électroniques (12, 27, 43) étant disposées dans le tableau de bord (1) et communiquant l'une avec l'autre ; et
un élément de montage (3) adapté à être monté de façon démontable sur une paroi (1aW) de la partie d'ouverture (1a) du tableau de bord (1), dans lequel
l'une (43) des au moins deux unités électroniques (12, 27, 43) est disposée dans une position où la première (43) des au moins deux unités électroniques (12, 27, 43) est accessible par l'intermédiaire de la partie d'ouverture (la), l'élément de montage (3) étant démonté du tableau de bord (1), et
**caractérisé en ce que**
une autre (27) des au moins deux unités électroniques (12, 27, 43) qui détermine les informations d'identifiant est disposée dans une position où elle est entourée par les éléments (5, 13b, 19, 49, 53, 63, 65) du tableau de bord (1) et recouverte par la première unité électronique (43) et les éléments (5, 13b, 19, 49, 53, 63, 65) par rapport à la partie d'ouverture (43), de sorte que la zone accessible à travers la partie d'ouverture (1a) à ladite autre unité électronique (27) est rétrécie.

2. Dispositif antivol (10) de véhicule selon la revendication 1, **caractérisé en ce que** l'élément de montage (3) est une unité de mesurage (3).

3. Dispositif antivol (10) de véhicule selon l'une quelconque des revendications 1 et 2, **caractérisé en ce que** les éléments (5, 13b, 19, 49, 53, 63, 65) du tableau de bord (1) comportent un élément de direction (5) disposé entre l'autre unité électronique (27) et la partie d'ouverture (1a).

4. Dispositif antivol (10) de véhicule selon l'une quelconque des revendications 1 à 3, **caractérisé en ce que** les éléments (5, 13b, 19, 49, 53, 63, 65) du tableau de bord (1) comportent un faisceau de câbles (49) disposé entre l'autre unité électronique (27) et la partie d'ouverture (1a).

5. Dispositif antivol (10) de véhicule selon l'une quelconque des revendications 1 à 4, **caractérisé en ce que** les éléments (5, 13b, 19, 49, 53, 63, 65) du tableau de bord (1) comportent un conduit de climatiseur (53) disposé entre l'autre unité électronique (27) et la face supérieure (1b) du tableau de bord (1).

6. Dispositif antivol (10) de véhicule selon l'une quelconque des revendications 1 à 5, **caractérisé en ce que** les éléments (5, 13b, 19, 49, 53, 63, 65) du tableau de bord (1) comportent une unité de colonne (19) disposée en dessous de l'autre unité électronique (27).

7. Dispositif antivol (10) de véhicule selon l'une quelconque des revendications 1 à 6, **caractérisé en ce que** les éléments (5, 13b, 19, 49, 53, 63, 65) du tableau de bord (1) comportent une unité de frein (63) et une unité de frein de stationnement (65) qui sont disposées en dessous de l'autre unité électronique (27).

8. Dispositif antivol (10) de véhicule selon l'une quelconque des revendications 1 à 7, **caractérisé en ce que** le tableau de bord (1) est inclus dans l'habitacle du véhicule (9) et le compartiment moteur (11) est disposé dans une position en avant par rapport à l'habitacle du véhicule (9), un tableau de bord (13) configuré pour séparer l'habitacle du véhicule (9) du compartiment moteur (11) comporte une partie bombée (13b) qui est bombée du côté de l'habitacle du véhicule (9) de sorte que la partie bombée (13b) se rapproche de l'autre unité électronique (27) et les éléments (5, 13b, 19, 49, 53, 63, 65) du tableau de bord (1) comportent la partie bombée (13b).

9. Dispositif antivol (10) de véhicule selon l'une quelconque des revendications 3 à 8, **caractérisé en ce que** les au moins deux unités électroniques sont montées sur l'élément de direction (5) par l'intermédiaire de consoles de montage d'unité électronique respectives (25, 41).

10. Dispositif antivol (10) de véhicule selon l'une quelconque des revendications 1 à 9, **caractérisé en ce que** la première (43) des au moins deux unités électroniques (12, 27, 43) est configurée pour commander le fonctionnement de diverses parties du véhicule, et lorsque les informations d'identifiant de la clé sont détenues en commun entre la première (43) des au moins deux unités électroniques (12, 27, 43) et l'autre unité électronique (27), le fonctionnement des diverses parties du véhicule peut être commandé par la première (43) des au moins deux unités électroniques (12, 27, 43).

11. Dispositif antivol (10) de véhicule selon la revendication 10, **caractérisé en ce que** les au moins deux unités électroniques (12, 27, 43) comportent un module de commande de moteur (12) disposé dans le compartiment moteur (11), et le module de commande de moteur (12) possède d'autres informations d'identifiant de la clé, les autres informations d'identifiant étant communes à celle de la première (43) des au moins deux unités électroniques (12, 27, 43) et l'autre unité électronique (27).

12. Dispositif antivol (10) de véhicule selon la revendication 7, **caractérisé en ce que** l'unité de frein (63) est disposé de façon sensiblement verticale en dessous de l'autre unité électronique (27) et l'unité de frein de stationnement (65) est disposée dans une position légèrement déviée vers la gauche dans le sens de la largeur du véhicule par rapport à une position sensiblement verticale en dessous de l'autre unité électronique (27).
